# EUROPEAN PATENT SPECIFICATION

(11) **EP 3 867 101 B1**
(45) Date of publication and mention of the grant of the patent: **24.01.2024**
(21) Application number: 19789639.2
(22) Date of filing: 14.10.2019
(51) Int. Cl.: B60R 13/01, F16B 5/07, B60P 1/28

(54) **METHOD AND SYSTEM FOR MOUNTING LINING ELEMENTS AND THE LIKE**
VERFAHREN UND SYSTEM ZUR MONTAGE VON VERKLEIDUNGSELEMENTEN UND DERGLEICHEN
PROCÉDÉ ET SYSTÈME DE MONTAGE D'ÉLÉMENTS DE REVÊTEMENT ET SIMILAIRE(S)

(30) Priority: 15.10.2018 SE 1851258
(43) Date of publication of application: 25.08.2021
(73) Proprietor: Trelleborg Izarra SA, 01440 Alava (ES)
(72) Inventor: ALBERDI BALZOLA, Alberto, 01007 Vitoria Gasteiz Alava (ES); SAMUELSON, Carl, 231 31 Trelleborg (SE)
(74) Representative: Ström & Gulliksson AB
(86) International application number: PCT/EP2019/077806
(87) International publication number: WO 2020/078918

(56) References cited:
- GB-A- 1 451 573
- US-A1- 2011 101 723
- US-A1- 2016 194 035

## Description

### TECHNICAL FIELD

The present invention relates to a method for mounting lining elements to a structure exposed to wear, as well as a lining system for protection of such a structure.

### BACKGROUND

In the field of construction and mining, loads of gravel, rocks and stones need to be transported or moved by haulers which are loaded by an excavator or loader. The rocks and stones are often heavy and may damage or miss shape the hauler bucket. Also lighter gravel may expose the structure to wear, for instance a sliding wear. In order to protect the hauler bucket from wear, various lining systems can be used.

One example of a known liner is a wear plate called "Trellex PP" described in the Handbook "Wear lining and sheeting" version 1.2 issued by the Swedish company Metso Mineral (Sweden AB). This wear plate comprises a wear rubber attached to a bottom mounting plate of steel.

There are several known methods for attaching lining elements to an underlying structure, in i.e. a hauler bucket. Lining elements can for instance be attached using bolts, as disclosed as an example in WO2016/113138A1.

Other methods are disclosed in US7416236B2 and US7618075B2, where the fabric layer of the lining element is adhered to the vehicle wear surface by means of adhesive bonding. However, this is not preferable since the adhesive may lose its binding properties over time and may not be strong enough to ensure secure fastening of the lining elements. Shear forces generated by movement of the load can cause weak point in the installation, such as edges, to come off the mounting surface. Once this occur, a gradual takeoff of the entire installation is hard to avoid. Some adhesives also require high temperatures upon application and may be sticky and difficult to handle (for example hot melt adhesives and hot or thixotropic glues). Adhesives commonly used in prior-art methods may further spread dangerous fumes during the application process. The adjustment and re-orientation of the lining elements is difficult once bonding of the adhesive has begun, and if the lining elements bonded to the mounting surfaces are to be de-attached therefrom, this is a time consuming, costly, environmentally dangerous (aggressive chemicals are often needed) and difficult process.

Further background art is disclosed in GB1451573A, US2011/101723A1 and US2016/194035A1.

Neither of these known systems for attaching lining elements fully meet the increasing demands for facilitated mounting while maintaining secure fastening. Thus, there is a need for an improved method for the attachment of lining elements.

### SUMMARY

An object of the present invention is to provide a new concept of mounting lining elements, which is improved over prior art and which eliminates or at least mitigates the drawbacks discussed above. This object is achieved by the invention set forth in the appended independent claims with preferred embodiments defined in the related dependent claims.

The inventive concept is - inter alia - based on the idea that an interface engagement fastening arrangement comprising a hook and loop fastener can surprisingly be used for attaching lining elements to a wear surface of a hauler truck or the like. This allows for easy application, with no need for special tools or dangerous chemicals. Furthermore, the lining elements are left intact without holes for bolts or other fastening means. The otherwise labour intensive attachment process of the lining elements are eased and can be performed more quickly. In addition, the lining elements can be cut into suitable shapes and sizes adapted to the topography and structure of the mounting surface.

In a first aspect, there is provided a method of mounting lining elements to a structure exposed to wear by means of an interface engagement fastening arrangement. The method comprises the steps of attaching at least one strip or sheet provided with a first part of the interface engagement fastening arrangement to a mounting surface of the structure, the first part being exposed; providing lining elements having a second part of the interface engagement fastening arrangement; and attaching the second part of the lining elements to the exposed first part of the interface engagement fastening arrangement attached to the mounting surface of the structure. The first and second parts of the interface engagement fastening arrangement are engaged by means of corresponding hook-like projections and matching loops provided on the first and second parts, respectively, whereby the lining element mounting is obtained.

This method is advantageous in that the lining elements are easy to attach to the mounting surface while secure fastening is maintained. In addition, no heavy tools or chemicals are needed. Furthermore, the method may be applied to wear structures of different sizes and shapes. The engagement of the first and second parts of the interface engagement fastening arrangement allows for a secure fastening which is resistant to for instance tough weather, temperature differences and wear from heavy objects and the like. The lining elements may be removed in a clean way by means of tools or manually. Lining elements having a thickness of approximately 10 to 20 mm can be removed by hand. When removing thicker lining elements, lever tools may be helpful due to the higher weight of the lining elements. Prior-art systems using adhesives are often forced to use chemicals to remove top liner having been i.e. glued to the mounting surface. In the method of this disclosure, no such chemicals are needed. The lining elements disclosed herein may be removed by peeling them off the mounting surface and pulling them diagonally from one of the corners of the lining element.

In a second aspect, there is provided a system for protection of a structure exposed to wear. The system comprises at least one strip or sheet provided with a first part of an interface engagement fastening arrangement. The strip or sheet is configured to be attached to the structure, such that the first part is exposed. The system further comprises a number of lining elements having a second part of the interface engagement fastening arrangement. The first and second parts of the interface engagement fastening arrangement are configured to be engaged with each other for securing the lining elements to the structure. The interface engagement fastening arrangement comprises a hook and loop fastener with a number of hook-like projections and matching loops provided on the first and second parts, respectively.

This system is advantageous in that it is easy to use and less time consuming than prior-art systems for attaching lining elements to structures exposed to wear. No additional devices are needed to apply the lining elements to the mounting surface. Additional devices, such as means for attaching the lining element to the mounting surface or tools, may be expensive and difficult or dangerous to use. The system provided herein is also safe for the user.

Lining elements included in a system according to the second aspect for protection of a structure exposed to wear have an engagement part configured to be applied to an engagement part of a mounting surface of the structure to be protected. This is advantageous in that the lining elements can be applied to the mounting surface without need to use additional tools or aggressive chemicals. The system is simple to use and safe for the user.

In an aspect, the user may by own means attach the second part of the interface engaging fastening arrangement to the bottom of the lining element.

### BRIEF DESCRIPTION OF THE DRAWINGS

Embodiments of the invention will be described in the following, reference being made to the appended diagrammatical drawings which illustrate non-limiting examples of how the inventive concept can be reduced into practice.
Fig. 1 is a schematic, isometric view of a hauler bucket with a lining system attached thereto.
Fig. 2 is a schematic view of a lining system attached to a side wall of the hauler bucket,
Fig. 3 is an isometric view of a lining element shown in Fig. 2,
Fig. 4a is a schematic view of a hauler bucket partially provided with pieces of a first part of an interface engagement fastening arrangement,
Fig. 4b is a schematic view of the hauler bucket in Fig. 4a with lining elements being attached to the bottom of the bucket, and
Figs 5a-c show, on a large scale, schematic overviews of the mechanism behind different interface engagement fastening arrangements (Fig. 5a not forming part of the invention).

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein. Rather, these embodiments are provided by way of example so that this disclosure will be thorough and complete, and will fully convey the scope of the invention, such as it is defined in the appended claims, to those skilled in the art.

### Lining of hauler bucket

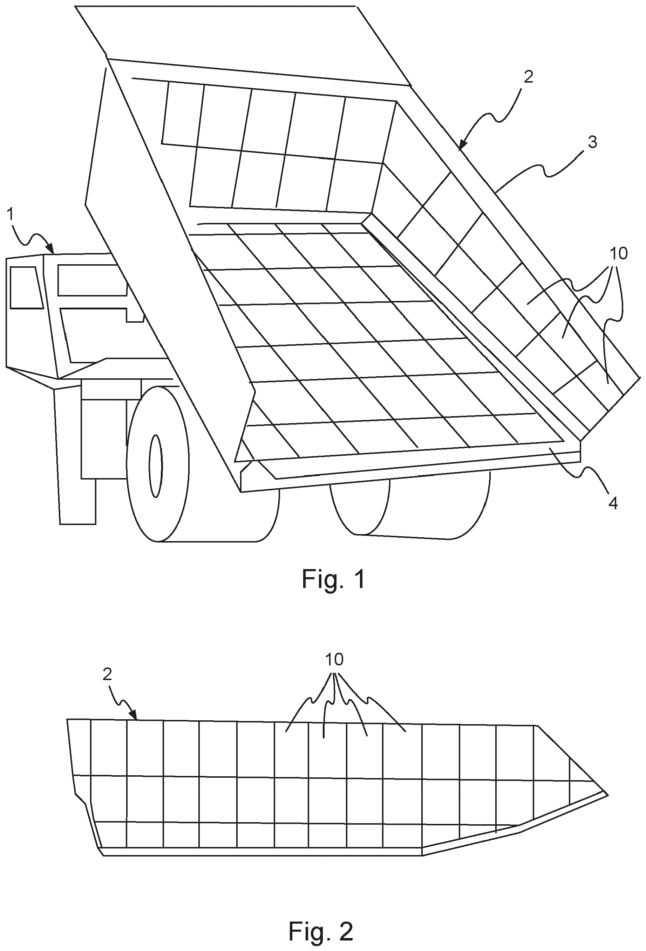

With reference to Fig. 1, a hauler truck 1 with a bucket 2 lined with lining elements 10 is shown. The lining elements 10 cover the internal sides 3 and bottom 4 of the hauler bucket 2.

Fig. 2 shows a side wall of the hauler bucket 2 and illustrates an arrangement of lining elements 10. As can be seen, the lining elements 10 have different sizes and shapes depending on their location in the bucket 2.

### Example of lining elements

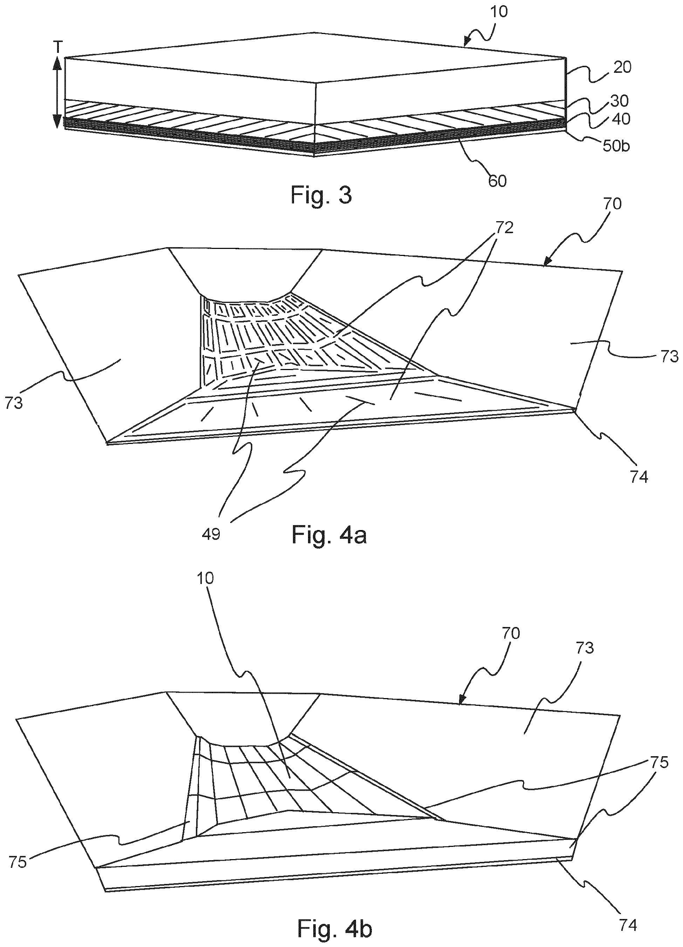

A lining element 10 according to one embodiment is shown in the perspective in Fig. 3. In the following, the lining element 10 is also referred to as a wear-impeding member or a wear plate. The lining element 10 may be a multi-layer structure. A basic multi-layer structure of the lining element 10 comprises a combination of three layers 20, 30, 40 of polymer materials.

In Fig. 3 the lining element 10 includes a wear-impeding layer 20 exposed to wear. Beneath the wear-impeding layer 20 is an intermediate, energy-absorbing layer 30. At the bottom, the lining element 10 has a reinforcing layer 40. Lastly, the lining element 10 is provided with a second part 50b of an interface engagement fastening arrangement to be further described in the following. The thickness T of the lining element 10 may vary according to the specific applications. For a light duty application, e.g. gravel, the thickness could be as low as 5 mm and for heavy duty the thickness could be up to 210 mm.

The combination of the sandwiched multiple layers 20, 30, 40 making up the multilayer polymer lining element 10 in Fig. 3 results in an efficient product which has good shock absorbing properties thanks to the combination of both a wear layer and an energy absorbing layer.

A lining surface 60 provided with the second part 50b of the interface engagement fastening arrangement will be directed towards the surface or foundation onto which the lining elements 10 are to be mounted and attached. When the lining elements 10 are attached to this mounting surface, the wear-impeding layer 20 will form the load-carrying surface of the hauler 2. The lining element 10 may comprise additional layers or fewer layers of polymer materials. However, the second part 50b of the interface engagement fastening arrangement should still be provided on the lining surface 60 of the lining element 10, regardless of the number of layers in the lining element 10. Thus, the second part 50b of the interface engagement fastening arrangement should always face the mounting surface of the structure onto which the lining elements 10 are to be attached.

In an embodiment (not shown), the lining element comprises a wear-impeding layer, an energy-absorbing layer and a second part of the interface engagement fastening arrangement. In other words, such lining element corresponds to the lining element shown in Fig. 3 but without the reinforcing layer 40.

### System of lining

Fig. 4a shows a hauler bucket 70, where a number of pieces 49, such as strips or sheets, each with a first part 50a of an interface engagement fastening arrangement, have been attached to a mounting surface 72 of the bucket 70. A plurality of differently sized and shaped pieces of lining elements 10 are to be mounted onto several different areas on the mounting surfaces 72. Pieces 49 with the first part 50a of the interface engagement fastening arrangement have been attached on the edges and centre of each area where lining elements 10 are to be attached on the mounting surface 72. The sides 73 of the hauler bucket 70 have not yet been provided with pieces 49 with the first parts 50a of an interface engagement fastening arrangement. The bottom of the short edge portion 74 of the hauler bucket 70 and the bottom of the bucket 70 have been provided with pieces 49 with the first part 50a of an interface engagement fastening arrangement.

Optionally, the pieces 49 of the first part 50a of the interface engagement fastening arrangement are attached to the mounting surface 72 of the hauler bucket 70 such that they overlap each other (not shown). The overlap between ends of the pieces results in that they are more durable and withstand the removal of multiple lining elements without loosening from the hauler bucket 70 (not shown).

In Fig. 4b, the hauler bucket 70 of Fig. 4a is shown in the process of being covered with lining elements 10. In an initial step, lining elements 10 have been provided or cut into differently shaped pieces and attached to the first part 50a attached to the mounting surface 72 in the bottom of the hauler bucket 70 and on the bottom of the short edge portion 74 of the hauler bucket 70. The sides 73 of the hauler bucket 70 are not yet covered with lining elements 10. The edges 75 of the lining elements 10 are also shown.

### Examples of interface engagement fastening arrangements

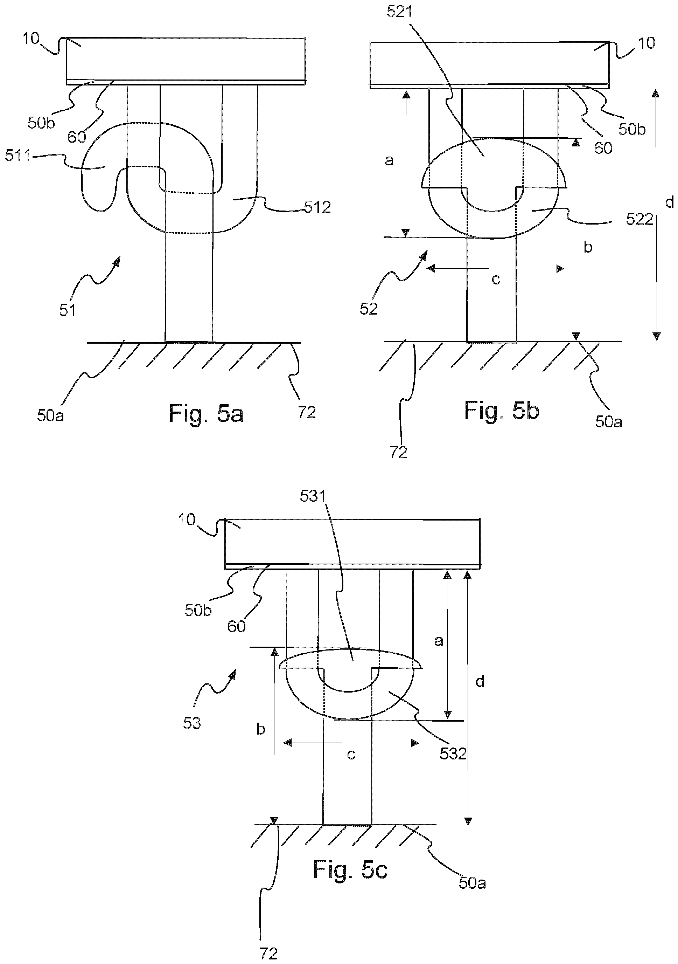

Different types of mechanical interface engagement fastening arrangements are shown in Figs 5a-c. Fig. 5a not forming part of the invention, shows a basic hook and loop fastener 51 where a hook portion 511 is engaged with a matching loop shaped portion 512. Fig. 5b shows a mushroom fastener 52 where the mushroom shaped protrusion 521 is engaged with a matching loop shaped portion 522. Fig. 5c shows a T-shaped fastener 53 where a T-shaped protrusion 531 is engaged with a matching loop shaped portion 532.

The mushroom shaped fastener 52 in Fig. 5b and the T-shaped fastener 53 in Fig. 5c have arrows a, b, c, d indicating different dimensions of the interface engagement fastening arrangements. A height "a" of the loops 522, 532 may be approximately between 1 and 2 mm, preferably 1.5 mm.

A height "b" in Fig. 5b of the protrusion 521 may be approximately between 1 and 2 mm, preferably 1.5 mm. In Fig. 5b, a width "c" of the loop 522 and a head of the protrusion 521 may be between 0.2 to 0.4 mm, preferably 0.3 mm. The distance "d" between the first part 50a and the second part 50b in the closed mushroom shaped fastener 52 is approximately between 0.8 and 3.0 mm, preferably between 1.5 and 2.8 mm and most preferred between 1.9 and 2.5 mm. The height of the protrusion 521 or the loop 522 may be approximately five times larger than the width of the loop 522 and the head of the protrusion 521. The number of mushroom shaped protrusions 521 or loops 522 per area unit is within the range of 40-200/cm², preferably 50-150/cm² and most preferred approximately about 70/cm².

The height "b" of the T-shaped protrusion 531 of the T-shaped fastener 53 in Fig. 5c may be between 0.2 and 1.0 mm, preferably between 0.3 and 0.8 mm and most preferred between 0.4 and 0.55 mm. The distance "d" between the first part 50a and the second part 50b in the T-shaped fastener 53 is approximately between 1.0 and 3.0 mm, preferably between 1.4 and 2.5 mm and most preferred between 1.7 and 1.9 mm. The number of T-shaped protrusions 531 or loops 532 per area unit is within the range of 150-400/cm², preferably in the range of 200-300 /cm² and most preferred between 236-288/cm².

The number of protrusions 511, 521, 531 or loops 512, 522, 532 per area unit on the first part 50a or the second part 50b is within the range of 40-400/cm².

The plurality of protrusions 511, 521, 531 or loops 512, 522, 532 per area unit achieves a secure fastening of the lining element 10 to the mounting surface 72. Hence, the shear resistance between the first part 50a and the second part 50b is high, which impedes the lining element 10 from moving or sliding once it is mounted to the hauler truck 70. A shear strength of the interface engagement fastening arrangements is as high as up to about 40 N/cm2. On the other hand, a low peel strength value of the interface engagement fastening arrangement allows the easy removal of the lining elements when worn.

Even though the shear strength between the first part 50a and the second part 50b is high, the lining element 10 may be removed from the hauler bucket 70 when the lining element 10 has been e.g. worn out. If the lining element 10 is pulled straight upwards, perpendicular to the mounting surface 72, the force between the first part 50a and the second part 50b will be high. Hence, the removal of the lining element 10 is preferably performed by pulling one of the corners of the lining element 10 upwards and diagonally towards its diagonally opposite corner. Altogether, the first part 50a and the second part 50b of the interface engagement fastening arrangements provide a lining element 10 which is securely fastened to the mounting surface 72 impeding sliding or movement of the lining element 10. At the same time, the lining element 10 may be removed from the mounting surface 72 easily.

Each interface engagement fastening arrangements comprises two separate parts; a first part 50a and a second part 50b, as shown in Fig. 5. Each part 50a, 50b is in the form of a strip or sheet provided with a large number of engaging portions, such as a mushroom shaped protrusion 521, a hook 511, a loop 512 or the like.

### Multi-layer lining element

Returning now to the lining element 10 shown in Fig. 3, it should be mentioned that a multi-layer structure is often a favourable option. The wear-impeding layer 20 comprises a polymer material with a certain amount of reinforcing fillers which provide the layer 20 with higher wear resistance and an improved breaking strength. An example of reinforcing filler is carbon black. The wear-impeding layer 20 may have different hardness depending on the application. Preferably, the material of the layer 20 is natural rubber or a blend of synthetic elastomers. The wear-impeding polymer layer 20 may have different hardness due to the application, and preferably the hardness is about 30-90 Shore A, more preferably about 50-75 Shore A and most preferable about 60-65 Shore A.

The energy-absorbing layer 30 comprises a polymer material, preferably a soft natural rubber material. The hardness of the energy-absorbing layer 30 is preferably in the approximate range 30-70 Shore A, preferably about 30-50 Shore A and most preferable about 40-45 Shore A. The purpose of the energy-absorbing layer 30 is to absorb energy from load falling onto the lining and to reduce noise.

The hardness of the lower reinforcing layer is about 40-90 Shore A, preferably 50-75 Shore A, and most preferable 60-65 Shore A. The reinforcing layer 40 could in some applications comprise a homogenous polymer material or comprise textile reinforcements. It may also comprise a thin steel grid or reinforcing fibers (not shown). The reinforcing layer 40 may comprise the same material as the wear-impeding layer 20.

### Design and mounting of lining elements

With reference to Figs 4 and 5, the attachment process of the lining elements 10 to the mounting surface 72 will now be more thoroughly explained. In industries where heavy objects are to be transported, i.e. in the construction and mining industry, the use of transport vehicles such as hauler trucks 1 are common. The hauler buckets 2 may be damaged since they are exposed to wear. Hence, there is a need to cover and protect these structures to prolong their life time. Lining elements 10 such as lining plates can therefore be installed in these structures.

Interface engagement fastening arrangements are fastening means comprising two parts configured to mutually engage with each other. There are several interface engagement fastening arrangements available using different mechanism to obtain the fastening engagement between the two parts. Examples of interface engagement fastening arrangements are shown in Figs 5a-5c (Fig. 5a not forming part of the invention).

The interface engagement fastening arrangements contain a number of units with one female and one male part, wherein the female part provides a loop 512, 522, 532, and the male part provides a hook-like protrusion 511, 521, 531. Among different interface engagement fastening arrangements are the hook and loop fasteners 51, mushroom-shaped fasteners 52 and T-shaped fasteners 53 shown in Figs 5a-5c (Fig. 5a not forming part of the invention).

Common for the interface engagement fastening arrangements is that a large number of the individual engagement mechanisms shown in Figs 5a-5c are provided on a surface and forms an efficient attachment upon engagement with each other. When considering for instance Fig. 5a (not forming part of the invention), a plurality of the female opening (the U-shaped loop) 512 are placed next to each other on a surface, such as a sheet or strip 49. Similarly, a large number of the male part (the J-shaped hook) 511 are placed next to each other on another surface, such as a sheet or strip. When the surfaces are pressed together, the male and female elements on each surface engage with its matching counterpart whereupon the joined forces create an efficient fastening engagement in the interface between the surfaces, which have become releasably attached to one another.

The interface engagement fastening arrangements shown in Figs 5a-c (Fig. 5a not forming part of the invention) comprise a flexible and resilient material, such as a polymer. The polymer may for instance be a thermoplastic, such as polyamide or polypropylene. The first and second parts 50a, 50b may comprise different polymers.

The interface engagement fastening arrangements shown in Figs 5b-c are hook and loop fasteners. A hook and loop fastener comprises a large number of hook like projections and matching loops. When the kinked or bent portion of the hook like projection is threaded and penetrates through its matching loop, the hook like projection and the loop are engaged with each other. The loop may be of any shape, such as having a U-shape as in Figs 5b-c. A possible hook and loop system is for instance of Velcro^{®} type. The T-shaped protrusion 531 in Fig. 5c may also have a stem which is wider at the bottom attached to the first part 50a.

In the present disclosure, the lining elements 10 are equipped with the second part 50b of an interface engagement fastening arrangements. The inventors have surprisingly found that interface engagement fastening arrangements are efficient as means for attaching lining elements 10 to a structure 70 in need of protection from wear-impeding loads.

Before starting the process of attaching the lining elements 10 to a mounting surface 72 of a structure 70, the mounting surface 72 of the structure is firstly cleaned. This is to assist the first part 50a of the interface engagement fastening arrangement to attach firmly to the mounting surface 72 of the structure 70.

With reference to Fig. 4a, the pieces of the first part 50a of the interface engagement fastening arrangement have been cut into appropriately shaped and sized pieces 50a and attached to the mounting surface 72 of the structure 70. The upper side of the first part 50a of the interface engagement fastening arrangement is exposed. The attachment of the first parts 50a of the interface engagement fastening arrangement can be performed by means of a non-toxic adhesive already present on the side of the first part 50a facing the mounting surface 72 of the structure 70. Optionally, it may be attached using other fastening means such as an adhesive. An advantage with the attachment process disclosed herein is that the mounting surface 72 of the structure 70 does not need to be entirely covered with pieces of the first part 50a of the interface engagement fastening arrangement, as shown in Fig. 4a. Covering the edges and the centre of the mounting surface 72 - where the lining element 10 is to be attached - is enough for ensuring a secure attachment.

The first part 50a of the interface engagement fastening arrangement is preferably arranged in longitudinal and transverse portions. This assures a secure grip and engagement between the lining elements 10 and the mounting surface 72 in all directions, which yields a sufficient performance against shear forces coming from the abrasive wear materials in movement present in the hauler bucket 70.

The lining elements 10 are, as described above, provided with a second part 50b of the interface engagement fastening arrangement, configured to engage with the first part 50a of the interface engagement fastening arrangement. The second part 50b of the interface engagement fastening arrangement is provided on the lining elements 10 by means of i.e. vulcanisation or using an adhesive such as glue. Optionally, the user may by own measures attach the second part 50b of the interface engagement fastening arrangement to the lining element 10.

Preferably, the second part 50b is attached to the lining elements 10 using means of vulcanisation. The second part 50b provided with loops 512, 522, 532 is easier to vulcanise to the lining elements 10 than the first part 50a provided with the matching counterparts such as the hook 511, the mushroom shaped protrusion 521 or the T-shaped hook 531.

The lining elements 10 can further be (if necessary) cut to fit mounting surfaces of different shapes and sizes. As seen in Figs 4a and 4b, the mounting surface 72 of the hauler bucket 70 is uneven and require oddly shaped lining elements 10. The lining elements 10 shown in Fig. 4b have been cut into smaller pieces attached to the bottom of the hauler bucket 70, and larger pieces attached to the short end of the hauler bucket 70. Once the first part 50a of the interface engagement fastening arrangement is attached to the mounting surface 72 of the structure 70, the lining elements 10 can be mounted thereon.

To facilitate the attachment process, the lining elements 10 may be tilted towards an edge of the area they are meant to cover. The attachment is performed by lowering the lining element 10 towards the opposite edge of said area. In this way, you may adjust the lining element 10 in the start of the attachment process. If the lining element 10 is mounted by pressing the complete area of the lining element 10 down onto the first part of the interface engagement fastening arrangement, it may be difficult to adjust the positioning of the lining element 10 if it has been attached incorrectly or obliquely.

Preferably, the second part 50b of the interface engagement fastening arrangement on the lining element 10 is covered with a protective film (not shown). The film can thus be removed successively when mounting the lining element 10 starting at one end and lowering the lining element 10 a bit at the time. This eases the attachment process by avoiding incorrect fitting if i.e. the lining element 10 is dropped during the attachment process.

When the lining elements 10 have been attached to the mounting surface 72, edges and joints of the lining elements 10 may be sealed using a sealant (not shown) which may comprise a moisture curing and/or a non-sag elastomer. Thanks to the sealing, the introduction of for instance moisture, humidity and impurities between the lining elements 10 is avoided.

After installation of the lining elements 10 on/in the structure 70, the exposed edges 75 of the attached lining elements 10 are subject to wear. Optionally, these edges 75 may be covered using a protective lipping consisting of i.e. a metal such as steel (not shown). However, the lipping may consist of other durable and abrasion resistant materials.

The use of the interface engagement fastening arrangement as fastening means for the lining element 10 to the mounting surface 72 results in an efficient product with an improved attachment function compared to prior art. The lining elements 10 are easily attachable to an underlying structure 72 and can be adopted to different shapes of the underlying structure 72.

It should be appreciated that the inventive concept is not limited to the embodiments described above, and many modifications are feasible within the scope set forth in the appended claims. For instance, the lining system may be installed on any area exposed to wear, e.g. in mining industry, other types of vehicles in addition to haulers, conveyors, chutes, or any other area that needs protection in an exposed environment. Other types of interface engagement fastening arrangements than those described herein may also be used for the described lining elements. In the present disclosure, the second part is provided on the lining element. The second part may be provided on the mounting surface and the first part may be provided on the lining element. Further, it should be mentioned that the interface engagement fastening arrangement disclosed herein in certain applications and under certain circumstances can also be used for attaching other kinds of elements or parts to a mounting surface.

## Claims

1. A method of mounting lining elements to a structure exposed to wear by means of an interface engagement fastening arrangement, said method comprising the steps of attaching at least one strip or sheet (49) provided with a first part (50a) of the interface engagement fastening arrangement to a mounting surface (72) of the structure (70), wherein the first part (50a) is exposed; providing lining elements (10) having a second (50b) part of the interface engagement fastening arrangement; and attaching said second part (50b) of the lining elements (10) to said exposed first part (50a) of the interface engagement fastening arrangement attached to the mounting surface (72) of the structure (70); wherein the first (50a) and second (50b) parts of said interface engagement fastening arrangement are engaged by means of corresponding hook-like projections and matching loops of a hook and loop fastener provided on said first and second parts (50a, 50b), respectively; whereby said lining element mounting is obtained; and wherein the hook-like projections of the hook and loop fastener comprise:
(i) a number of mushroom shaped protrusions (521) each having a hat portion configured to be received in a matching loop (522) of the hook and loop fastener, wherein the hat portion of the mushroom shaped protrusion (521) and the matching loop (522) are engaged when the hat portion is penetrated through the loop (522); or
(ii) a number of T-hooks (531) each having a T-shaped portion configured to be received in a matching loop (532) of the hook and loop fastener, wherein the T-shaped portion of the T-hook (531) and the matching loop (532) are engaged when the T-shaped portion is penetrated through the loop (532).

2. The method according to claim 1, further comprising a step of cleaning the mounting surface (72) of the structure (70) before said attachment of the strips or sheets (49) provided with the first part (50a) to the mounting surface (72) of the structure (70).

3. The method according to claim 1 or 2, further comprising a step of cutting the lining elements (10) into pieces shaped to fit the mounting surface (72) of the structure (70) before said attachment of said second part (50b) to said first part (50a) of the mounting surface (72) of said structure (70).

4. The method according to any one of the preceding claims, further comprising a step of cutting the first part (50a) of the interface engagement fastening arrangement into pieces before said attachment of the first part (50a) to the mounting surface (72) of said structure (70).

5. The method according to any one of the preceding claims, wherein the second part (50b) of the interface engagement fastening arrangement is provided with a protective film; wherein the method further comprises a step of removing said protective film before said attachment of said second part (50b) to said first part (50a) of the mounting surface (72) of said structure (70).

6. The method according to any one of the preceding claims, further comprising a step of sealing edges and joints between the lining elements (10) by means of a sealant after said attachment of said second part (50b) to said first part (50a) of the mounting surface (72) of said structure (70); wherein said sealant preferably comprises a moisture curing agent and/or a non-sag elastomer.

7. The method according to any one of the preceding claims, wherein exposed edges (75) of the lining elements (10) are protected by a protective lipping after said attachment of said second part (50b) to said first part (50a) of the mounting surface (72) of said structure (70); wherein said protective lipping preferably comprises lipping elements formed by metal, such as steel.

8. The method according to any one of the preceding claims, wherein the mounting surface (72) of the structure (70) is a surface of a load-carrying section of a vehicle, preferably a surface of a hauler bucket.

9. A system for protection of a structure exposed to wear,
comprising at least one strip or sheet (49) provided with a first part (50a) of an interface engagement fastening arrangement, said at least one strip or sheet (49) being configured to be attached to said structure (70), such that said first part (50a) is exposed; and a number of lining elements (10) having a second part (50b) of said interface engagement fastening arrangement; wherein said first (50a) and second (50b) parts of said interface engagement fastening arrangement are configured to be engaged with each other for securing the lining elements (10) to said structure (70); wherein said interface engagement fastening arrangement comprises a hook and loop fastener with a number of hook-like projections and matching loops provided on said first and second parts (50a, 50b), respectively; and wherein the hook-like projections of the hook and loop fastener comprise:
(i) a number of mushroom shaped protrusions (521) each having a hat portion configured to be received in a matching loop (522) of the hook and loop fastener, wherein the hat portion of the mushroom shaped protrusion (521) and the matching loop (522) are engaged when the hat portion is penetrated through the loop (522); or
(ii) a number of T-hooks (531) each having a T-shaped portion configured to be received in a matching loop (532) of the hook and loop fastener; wherein the T-shaped portion of the T-hook (531) and the matching loop (532) are engaged when the T-shaped portion is penetrated through the loop (532).

10. The system according to claim 9, wherein said matching loops (522; 532) of the hook and loop fastener are U-shaped.

11. The system according to claim 9 or 10, wherein the second part (50b) of the hook and loop fastener is attached or bonded to the lining element (10) at a lining surface (60), preferably by means of vulcanisation or by means of an adhesive, such as glue.

12. The system according to any one of the claims 9-11, wherein the number of projections and loops of the hook and loop fastener per area unit is within the range of 40-400/cm².

## Patentansprüche

1. Verfahren zur Montage von Auskleidungselementen an einer Struktur, die Verschleiß ausgesetzt ist, mittels einer Schnittstelleneingriffsbefestigungsanordnung, wobei das Verfahren die folgenden Schritte umfasst: Anbringen mindestens eines Bands oder Flächengebildes (49), das mit einem ersten Teil (50a) der Schnittstelleneingriffsbefestigungsanordnung versehen ist, an einer Montagefläche (72) der Struktur (70), wobei der erste Teil (50a) freiliegt; Bereitstellen von Auskleidungselementen (10) mit einem zweiten Teil (50b) der Schnittstelleneingriffsbefestigungsanordnung; und Anbringen des zweiten Teils (50b) der Auskleidungselemente (10) an dem freiliegenden ersten Teil (50a) der Schnittstelleneingriffsbefestigungsanordnung, der an der Montagefläche (72) der Struktur (70) angebracht ist; wobei der erste Teil (50a) und der zweite Teil (50b) der Schnittstelleneingriffsbefestigungsanordnung mittels entsprechender hakenartiger Vorsprünge und passender Schlaufen eines Haken/Schlaufen-Befestigungselements, die entsprechend an dem ersten und zweiten Teil (50a, 50b) vorgesehen sind, in Eingriff gebracht werden; wodurch die Auskleidungselementmontage erhalten wird; und wobei die hakenartigen Vorsprünge des Haken/Schlaufen-Befestigungselement Folgendes umfassen:
(i) eine Anzahl pilzförmiger Ausbuchtungen (521), die jeweils einen Hutabschnitt aufweisen, der dazu ausgestaltet ist, in einer passenden Schlaufe (522) des Haken/Schlaufen-Befestigungselements aufgenommen zu werden, wobei der Hutabschnitt der pilzförmigen Ausbuchtung (521) und die passende Schlaufe (522) miteinander in Eingriff gebracht werden, wenn der Hutabschnitt durch die Schlaufe (522) hindurchgeführt wird; oder
(ii) eine Anzahl von T-Haken (531), die jeweils einen T-förmigen Abschnitt aufweisen, der dazu ausgestaltet ist, in einer passenden Schlaufe (532) des Haken/Schlaufen-Befestigungselements aufgenommen zu werden, wobei der T-förmige Abschnitt des T-Hakens (531) und die passende Schlaufe (532) miteinander in Eingriff gebracht werden, wenn der T-förmige Abschnitt durch die Schlaufe (532) hindurchgeführt wird.

2. Verfahren nach Anspruch 1, ferner umfassend einen Schritt des Reinigens der Montagefläche (72) der Struktur (70) vor der Anbringung der mit dem ersten Teil (50a) versehenen Bänder oder Flächengebilde (49) an der Montagefläche (72) der Struktur (70).

3. Verfahren nach Anspruch 1 oder 2, ferner umfassend einen Schritt des Schneidens der Auskleidungselemente (10) in Stücke, die für die Montagefläche (72) der Struktur (70) passend sind, vor der Anbringung des zweiten Teils (50b) an dem ersten Teil (50a) der Montagefläche (72) der Struktur (70).

4. Verfahren nach einem der vorangehenden Ansprüche, ferner umfassend einen Schritt des Schneidens des ersten Teils (50a) der Schnittstelleneingriffsbefestigungsanordnung in Stücke vor der Anbringung des ersten Teils (50a) an der Montagefläche (72) der Struktur (70).

5. Verfahren nach einem der vorangehenden Ansprüche, wobei der zweite Teil (50b) der Schnittstelleneingriffsbefestigungsanordnung mit einer Schutzfolie versehen ist; wobei das Verfahren ferner einen Schritt des Entfernens der Schutzfolie vor der Anbringung des zweiten Teils (50b) an dem ersten Teil (50a) der Montagefläche (72) der Struktur (70) umfasst.

6. Verfahren nach einem der vorangehenden Ansprüche, ferner umfassend einen Schritt des Abdichtens von Kanten und Fugen zwischen den Auskleidungselementen (10) mittels eines Dichtungsmittels nach der Anbringung des zweiten Teils (50b) an dem ersten Teil (50a) der Montagefläche (72) der Struktur (70); wobei das Dichtungsmittel vorzugsweise ein feuchtigkeitshärtendes Mittel und/oder ein standfestes Elastomer umfasst.

7. Verfahren nach einem der vorangehenden Ansprüche, wobei freiliegende Kanten (75) der Auskleidungselemente (10) nach der Anbringung des zweiten Teils (50b) an dem ersten Teil (50a) der Montagefläche (72) der Struktur (70) durch eine Schutzverkleidung geschützt werden; wobei die Schutzverkleidung vorzugsweise Verkleidungselemente umfasst, die aus Metall, wie etwa Stahl, ausgebildet sind.

8. Verfahren nach einem der vorangehenden Ansprüche, wobei es sich bei der Montagefläche (72) der Struktur (70) um eine Oberfläche eines lasttragenden Abschnitts eines Fahrzeugs, vorzugsweise um eine Oberfläche einer Lademulde, handelt.

9. System zum Schutz einer Struktur, die Verschleiß ausgesetzt ist, das Folgendes umfasst: mindestens ein Band oder Flächengebilde (49), das mit einem ersten Teil (50a) einer Schnittstelleneingriffsbefestigungsanordnung versehen ist, wobei das mindestens eine Band oder Flächengebilde (49) dazu ausgestaltet ist, an der Struktur (70) angebracht zu werden, so dass der erste Teil (50a) freiliegt; und eine Anzahl von Auskleidungselementen (10) mit einem zweiten Teil (50b) der Schnittstelleneingriffsbefestigungsanordnung; wobei der erste Teil (50a) und der zweite Teil (50b) der Schnittstelleneingriffsbefestigungsanordnung dazu ausgestaltet sind, miteinander in Eingriff gebracht zu werden, um die Auskleidungselemente (10) an der Struktur (70) festzumachen; wobei die Schnittstelleneingriffsbefestigungsanordnung ein Haken/Schlaufen-Befestigungselement mit einer Anzahl hakenartiger Vorsprünge und passender Schlaufen umfasst, die entsprechend an dem ersten und zweiten Teil (50a, 50b) vorgesehen sind; und wobei die hakenartigen Vorsprünge des Haken/Schlaufen-Befestigungselements Folgendes umfassen:
(i) eine Anzahl pilzförmiger Ausbuchtungen (521), die jeweils einen Hutabschnitt aufweisen, der dazu ausgestaltet ist, in einer passenden Schlaufe (522) des Haken/Schlaufen-Befestigungselements aufgenommen zu werden, wobei der Hutabschnitt der pilzförmigen Ausbuchtung (521) und die passende Schlaufe (522) miteinander in Eingriff gebracht werden, wenn der Hutabschnitt durch die Schlaufe (522) hindurchgeführt wird; oder
(ii) eine Anzahl von T-Haken (531), die jeweils einen T-förmigen Abschnitt aufweisen, der dazu ausgestaltet ist, in einer passenden Schlaufe (532) des Haken/Schlaufen-Befestigungselements aufgenommen zu werden, wobei der T-förmige Abschnitt des T-Hakens (531) und die passende Schlaufe (532) miteinander in Eingriff gebracht werden, wenn der T-förmige Abschnitt durch die Schlaufe (532) hindurchgeführt wird.

10. System nach Anspruch 9, wobei die passenden Schlaufen (522; 532) des Haken/Schlaufen-Befestigungselements U-förmig sind.

11. System nach Anspruch 9 oder 10, wobei der zweite Teil (50b) des Haken/Schlaufen-Befestigungselements an einer Auskleidungsfläche (60) an dem Auskleidungselement (10) angebracht oder angeklebt ist, vorzugsweise durch Vulkanisation oder mittels eines Haftmittels, wie etwa Klebstoff.

12. System nach einem der Ansprüche 9 - 11, wobei die Anzahl von Vorsprüngen und Schlaufen des Haken/Schlaufen-Befestigungselements pro Flächeneinheit im Bereich von 40 - 400/cm² liegt.

## Revendications

1. Procédé de montage d'éléments de revêtement sur une structure exposée à l'usure au moyen d'un agencement de fixation de prise d'interface, ledit procédé comprenant les étapes consistant à fixer au moins une bande ou feuille (49) pourvue d'une première partie (50a) de l'agencement de fixation de prise d'interface à une surface de montage (72) de la structure (70), dans lequel la première partie (50a) est exposée; à utiliser des éléments de revêtement (10) comportant une seconde partie (50b) de l'agencement de fixation de prise d'interface; et à fixer ladite seconde partie (50b) des éléments de revêtement (10) à ladite première partie exposée (50a) de l'agencement de fixation de prise d'interface fixée à la surface de montage (72) de la structure (70); dans lequel les première (50a) et seconde (50b) parties dudit agencement de fixation de prise d'interface sont en prise au moyen de protubérances de type crochet et de boucles complémentaires correspondantes d'un dispositif de fixation à crochets et à boucles disposées respectivement sur lesdites première et seconde parties (50a, 50b); ce par quoi ledit montage d'éléments de revêtement est obtenu; et dans lequel les protubérances de type crochet du dispositif de fixation à crochets et à boucles comprennent:
(i) un nombre de saillies en forme de champignon (521) comportant individuellement une partie chapeau configurée pour être reçue dans une boucle complémentaire (522) du dispositif de fixation à crochets et à boucles, dans lequel la partie chapeau de la saillies en forme de champignon (521) et la boucle complémentaire (522) sont en prise lorsque la partie chapeau a pénétré la boucle (522); ou
(ii) un nombre de crochets en T (531) comportant individuellement une partie en forme de T configurée pour être reçue dans une boucle complémentaire (532) du dispositif de fixation à crochets et à boucles, dans lequel la partie en forme de T du crochet en T (531) et la boucle complémentaire (532) sont en prise lorsque la partie en forme de T a pénétré la boucle (532).

2. Procédé selon la revendication 1, comprenant en outre une étape consistant à nettoyer la surface de montage (72) de la structure (70) avant ladite fixation des bandes ou feuilles (49) pourvues de la première partie (50a) à la surface de montage (72) de la structure (70).

3. Procédé selon la revendication 1 ou 2, comprenant en outre une étape consistant à couper les éléments de revêtement (10) en pièces formées pour s'ajuster à la surface de montage (72) de la structure (70) avant ladite fixation de ladite seconde partie (50b) à ladite première partie (50a) de la surface de montage (72) de ladite structure (70).

4. Procédé selon l'une quelconque des revendications précédentes, comprenant en outre une étape consistant à couper la première partie (50a) de l'agencement de fixation de prise d'interface en pièces avant ladite fixation de la première partie (50a) à la surface de montage (72) de ladite structure (70).

5. Procédé selon l'une quelconque des revendications précédentes, dans lequel la seconde partie (50b) de l'agencement de fixation de prise d'interface est pourvue d'un film protecteur; dans lequel le procédé comprend en outre une étape consistant à retirer ledit film protecteur avant ladite fixation de ladite seconde partie (50b) à ladite première partie (50a) de la surface de montage (72) de ladite structure (70).

6. Procédé selon l'une quelconque des revendications précédentes, comprenant en outre une étape consistant à sceller des bords et des jonctions entre les éléments de revêtement (10) au moyen d'un agent de scellement après ladite fixation de ladite seconde partie (50b) à ladite première partie (50a) de la surface de montage (72) de ladite structure (70); dans lequel ledit agent de scellement comprend de préférence un agent durcissant par humidification et/ou un élastomère ne s'affaissant pas.

7. Procédé selon l'une quelconque des revendications précédentes, dans lequel des bords exposés (75) des éléments de revêtement (10) sont protégés par une bande de chant de protection après ladite fixation de ladite seconde partie (50b) à ladite première partie (50a) de la surface de montage (72) de ladite structure (70); dans lequel ladite bande de chant de protection comprend de préférence des éléments de bande de chant formés de métal, tel que d'acier.

8. Procédé selon l'une quelconque des revendications précédentes, dans lequel la surface de montage (72) de la structure (70) est une surface d'une section porteuse de charge d'un véhicule, de préférence une surface d'une benne de camion.

9. Système de protection d'une structure exposée à l'usure, comprenant au moins une bande ou feuille (49) pourvue d'une première partie (50a) d'un agencement de fixation de prise d'interface, ladite au moins une bande ou feuille (49) étant configurée pour être fixée à ladite structure (70), de sorte que ladite première partie (50a) soit exposée; et un nombre d'éléments de revêtement (10) comportant une seconde partie (50b) dudit agencement de fixation de prise d'interface; dans lequel lesdites première (50a) et seconde (50b) parties dudit agencement de fixation de prise d'interface sont configurées pour être mises en prise l'une avec l'autre pour fixer lesdits éléments de revêtement (10) à ladite structure (70); dans lequel ledit agencement de fixation de prise d'interface comprend un dispositif de fixation à crochets et à boucles pourvu d'un nombre de protubérances de type crochet et de boucles complémentaires disposées respectivement sur lesdites première et seconde parties (50a, 50b); et dans lequel les protubérances de type crochet du dispositif de fixation à crochets et à boucles comprennent:
(i) un nombre de saillies en forme de champignon (521) comportant individuellement une partie chapeau configurée pour être reçue dans une boucle complémentaire (522) du dispositif de fixation à crochets et à boucles, dans lequel la partie chapeau de la saillie en forme de champignon (521) et la boucle complémentaire (522) sont en prise lorsque la partie chapeau a pénétré la boucle (522); ou
(ii) un nombre de crochets en T (531) comportant individuellement une partie en forme de T configurée pour être reçue dans une boucle complémentaire (532) du dispositif de fixation à crochets et à boucles; dans lequel la partie en forme de T du crochet en T (531) et la boucle complémentaire (532) sont en prise lorsque la partie en forme de T a pénétré la boucle (532).

10. Système selon la revendication 9, dans lequel lesdites boucles complémentaires (522; 532) du dispositif de fixation à crochets et à boucles ont une forme de U.

11. Système selon la revendication 9 ou 10, dans lequel la seconde partie (50b) du dispositif de fixation à crochets et à boucles est fixée ou collée à l'élément de revêtement (10) au niveau d'une surface de revêtement (60), de préférence au moyen d'une vulcanisation ou au moyen d'un adhésif, tel que de la colle.

12. Système selon l'une quelconque des revendications 9 à 11, dans lequel le nombre de protubérances et de boucles du dispositif de fixation à crochets et à boucles par unité de surface est compris dans la plage de 40 à 400/cm².
